# EUROPÄISCHE PATENTSCHRIFT

(11) **EP 2 668 074 B1**
(45) Veröffentlichungstag und Bekanntmachung des Hinweises auf die Patenterteilung: **28.09.2016**
(21) Anmeldenummer: 11791576.9
(22) Anmeldetag: 07.12.2011
(51) Int. Cl.: B60T 8/172, B60T 8/1769

(54) **VERFAHREN ZUR ERKENNUNG UND KORREKTUR DER FAHRZEUGREFERENZGESCHWINDIGKEIT UND FAHRZEUGSYSTEM**
METHOD FOR DETECTING AND CORRECTING VEHICLE REFERENCE SPEED, AND VEHICLE SYSTEM
PROCÉDÉ POUR DÉTECTER ET CORRIGER LA VITESSE DE RÉFÉRENCE D'UN VÉHICULE ET SYSTÈME POUR UN VÉHICULE

(30) Priorität: 28.01.2011 DE 102011003298
(43) Veröffentlichungstag der Anmeldung: 04.12.2013
(73) Patentinhaber: Continental Teves AG & Co. oHG, 60488 Frankfurt (DE); Audi AG, 85045 Ingolstadt (DE)
(72) Erfinder: CORNILS, Arne, 60389 Frankfurt am Main (DE); KASTEN, Manuel, 65795 Hattersheim (DE); REIM, Nikolaus, 85276 Pfaffenhofen (DE)
(74) Vertreter: Brand, Markus
(86) Internationale Anmeldenummer: PCT/EP2011/072109
(87) Internationale Veröffentlichungsnummer: WO 2012/100871

(56) Entgegenhaltungen:
- EP-A2- 0 331 131
- WO-A1-02/32732
- DE-A1-102004 040 757
- US-A- 5 579 230
- US-A1- 2008 071 452

## Beschreibung

Die Erfindung betrifft ein Verfahren zur Erkennung und Korrektur der Fahrzeugreferenzgeschwindigkeit, insbesondere bei deren Abseilung durch Schlepp- und/oder Rekuperationsmoment, eines Kraftfahrzeuges, insbesondere eines Allradfahrzeuges, mit einem Motor und einem Motorsteuergerät und mit einem Sensor zur Messung der Längsbeschleunigung des Kraftfahrzeuges, wobei mit Hilfe des Sensors die Längsbeschleunigung des Kraftfahrzeuges gemessen wird und mit Hilfe von Raddrehzahlsensoren die Radbeschleunigungen bestimmt werden. Sie betrifft weiterhin ein zugehöriges Fahrzeugsystem.

Moderne Kraftfahrzeuge besitzen neben ihrer Grundfunktionalität verschiedene Steuer- und Regelprogramme, die in brenzligen Situationen, beispielsweise bei starken Bremsvorgängen, bei Schleudervorgängen oder bei sonstigen Situationen, in denen das Fahrzeug instabil zu werden droht, den Fahrer unterstützen und auf eine Stabilisierung des Fahrzeuges hinwirken. Dabei haben sich insbesondere das Antiblockiersystem (ABS), die Antischlupfregelung (ASR) und das elektronische Stabilitätsprogramm (ESP) etabliert und bewährt. Alle drei Programme bzw. Systeme greifen in Situationen, in denen die Stabilität des Fahrzeuges gefährdet ist, aktiv in die Steuerung des Fahrzeuges ein. Erkennt beispielsweise das ABS bei einem Bremsvorgang das Blockieren eines oder mehrerer Räder, wird die Bodenhaftung dieser Räder durch bedarfsweisen Druckabbau und Druckaufbau in den Bremsen wieder verbessert. Durch diese Maßnahmen wird der Bremsweg nicht notwendigerweise kürzer, das Fahrzeug befindet sich aber während des Bremsvorgangs in einem stabilen Zustand. Gleichermaßen kann ein Durchdrehen der Räder, beispielsweise auf rutschigem Belag, mit Hilfe der Antischlupfregelung erkannt werden. Auch hier kann durch geeignete Gegenmaßnahmen die Haftung der Räder auf der Fahrbahn bzw. auf dem Untergrund verbessert werden. Eine Stabilisierung des Autos in Situationen, bei denen das Auto zu Schleudern droht und von der Fahrbahn abzukommen droht, beispielsweise bei schnellen Kurvenfahrten, kann durch das ESP erreicht werden, wobei durch kurze Bremsimpulse das Fahrzeug in der Bahn gehalten wird.

Ein wichtiger Bestandteil der ESP und ASR Systeme ist die Motor-Schleppmoment-Regelung (MSR), die ein Rutschen der angetriebenen Räder, insbesondere auf glatter Fahrbahn, wenn der Fahrer abrupt vom Gas geht oder die Kupplung beim Herunterschalten zu schnell kommen lässt, verhindert. Das Steuergerät des Motors bzw. Motorsteuergerät erhöht dann kurzfristig auf Anforderung des ESP-Steuergeräts das Drehmoment, um das Fahrzeug stabil zu halten. Im Falle von Hybridfahrzeugen wird statt einem Motorsteuergerät gewöhnlich ein Hybridmanager eingesetzt, der sowohl den Verbrennungsmotor als auch den Elektromotor ansteuert. Weiterhin kommen auch Powertrain-Manager zum Einsatz. Im Rahmen dieser Anmeldung bezeichnet Motorsteuergerät jeweils das entsprechend im Fahrzeug eingesetzte Gerät.

Eine Kenngröße, die in all diesen Situationen eine wichtige Rolle spielt, ist der so genannte Schlupf des jeweiligen Rades, der das Verhältnis zwischen der tatsächlich zurück gelegte Strecke pro Radumdrehung und dem tatsächlichen Radumfang kennzeichnet. Schlupf kann auch gekennzeichnet werden als das Verhältnis der Drehzahl eines angetriebenen Rades zu der eines (hypothetischen) nicht angetriebenen und daher formschlüssig mitlaufenden Rades.

Während ein geringer Schlupf dazu notwendig ist, dass das Fahrzeug überhaupt durch die Räder fortbewegt werden kann, kennzeichnet großer Schlupf im Regelfall Situationen, in denen das Fahrzeug instabil wird. So ist beispielsweise das Blockieren der Räder durch einen großen Bremsschlupf und das Durchdrehen der Räder durch einen großen Antriebsschlupf gekennzeichnet.

Für viele Regelmechanismen, die das Fahrzeug stabilisieren sollen, ist die Kenntnis der tatsächlichen Fahrzeuggeschwindigkeit von Vorteil bzw. notwendig. Diese Größe wird in gewöhnlichen Systemen nicht bestimmt bzw. kann nicht ohne Weiteres direkt bzw. unmittelbar bestimmt werden. Sie kann jedoch indirekt beispielsweise über Signale, die von Raddrehzahlsensoren, die den jeweiligen Rädern zugeordnet sind, ermittelt werden. Ist die Fahrzeuggeschwindigkeit bzw. Fahrzeugreferenzgeschwindigkeit bekannt, kann durch den Vergleich mit den Drehgeschwindigkeiten der einzelnen Räder Schlupf detektiert werden.

Eine bekannte zu lösende technische Aufgabe besteht demnach darin, aus den Informationen, die die Raddrehzahlsensoren liefern, in möglichst zuverlässiger Weise - die einzelnen Räder können in Schlupf laufen - die Fahrzeuggeschwindigkeit zu bestimmen. Bei Fahrzeugen mit nur einer angetriebenen Achse, eignen sich dabei besonders vorteilhaft die Signale der Raddrehzahlsensoren, die den nicht angetriebenen Rädern zugeordnet sind.

Diese Art der Bestimmung der Fahrzeuggeschwindigkeit ist nicht ohne weiteres möglich bei Fahrzeugen, bei denen alle Räder angetrieben werden, d. h. bei Allradfahrzeugen. Gerade bei diesen Fahrzeugen ist es aber wichtig, ein Abseilen der Referenzgeschwindigkeit bzw. Fahrzeugreferenzgeschwindigkeit zu erkennen. Als Abseilen wird hier der Vorgang verstanden, bei dem sich die ermittelte Fahrzeugreferenzgeschwindigkeit von der tatsächlichen Fahrzeuggeschwindigkeit immer weiter entfernt. Dies insbesondere in der Richtung, dass die ermittelte Fahrzeugreferenzgeschwindigkeit niedriger ist als die tatsächliche Fahrzeugreferenzgeschwindigkeit. Aus der DE 199 39 979 A1 ist ein Verfahren zur Erkennung einer unrichtigen Fahrzeugreferenzgeschwindigkeit bekannt, bei dem bedarfsweise ein oder mehrere Räder vom Antrieb entkoppelt werden, wobei die Erkennung bezugnehmend auf das Laufverhalten des oder der entsprechenden entkoppelten Räder erfolgt.

Die Abseilerkennung der Referenzgeschwindigkeit im Rahmen der technischen Möglichkeiten elektronischer Bremssysteme ist insbesondere wichtig bei Allradfahrzeugen mit im Schiebebetrieb starrem Längsdifferential (Torsen) oder auch starren Allradantrieben oder auch bei Hybridfahrzeugen. Die Abseilerkennung wird besonders wichtig bei Fahrzeugen dieser Art mit großen Verbrennungskraftmotoren, durch die ein hohes Schleppmoment erzeugt werden kann, sowie bei Hybridfahrzeugen mit einem Elektromotor, der bei Bremsvorgängen als Generator eingesetzt wird und auf diese Weise ein zum Teil sehr starkes Rekuperationsmoment erzeugt. Ein großes Schleppmoment tritt beispielsweise dann auf, wenn der Fahrer plötzlich vom Gas geht oder eine deutlich niedrigere Gangstufe plötzlich einlegt. Beim Vorliegen derartiger Schlepp- oder Rekuperationsmomente kann es passieren, dass alle Räder auf niedrigen Reibwerten durch die Schleppmomente synchron in Schlupf gezogen werden. Das heißt, die Räder drehen sich faktisch langsamer und rollen dadurch weniger Strecke ab, als durch das Fahrzeug zurückgelegt wird.

Diese Auftreten von Schlupf kann mit einer geringen Dynamik erfolgen, so dass beispielsweise der ESP-Regler eine gewöhnliche tatsächliche bzw. reale Verzögerung des Fahrzeuges annimmt. Da der ESP-Regler von einer regulären bzw. gewöhnlichen Verzögerung ausgeht, wird er keine das Fahrzeug stabilisierenden Maßnahmen einleiten. Das Abseilen der Fahrzeugreferenzgeschwindigkeit, das in den oben beschriebenen Fällen ein schleichender Prozess ist, führt dann zu einem völlig instabilen Fahrzeug. Dies ist insbesondere auch deshalb der Fall, da bei größer werdendem Schlupf die Seitenführungskräfte der Räder rapide abnehmen.
Das Fahrzeug kann in diesen Fällen schwerlich bis gar nicht kontrolliert werden und fängt gewöhnlich an, unkontrolliert zu schleudern. Die genannten Probleme treten auf, sobald die Radschleppmomente größer werden als der Reibwert zwischen Fahrbahn und Reifen dies zulässt. Dies kann typischerweise auf Spiegeleis auftreten. Bei größeren bzw. größer werdenden Schlepp- bzw. Rekuperationsmomenten ist ein solcher Prozess aber auch auf Fahrbahnen mit anderem Belag denkbar.
Ein Referenzabseiler bzw. das Abseilen der Fahrzeugreferenzgeschwindigkeit wurde bei den oben genannten Fahrzeugtypen bisher nicht oder nur unzureichend erkannt. Die Notwendigkeit einer solchen Erkennung ist aber durch die modernen Weiterentwicklungen von Hybridfahrzeugen und Allradfahrzeugen stark gestiegen.

Ein Verfahren zur Erkennung und Korrektur der Fahrzeugreferenzgeschwindigkeit gemäß dem Oberbegriff des unabhängigen Anspruchs 1 ist aus dem Dokument US 5 579 230 A bekannt.

Der Erfindung liegt daher die Aufgabe zu Grunde, ein Verfahren zur Erkennung und Korrektur der Fahrzeugreferenzgeschwindigkeit, insbesondere bei deren Abseilung durch Schlepp- und/oder Rekuperationsmomente bereitzustellen, das einerseits eine extrem zuverlässige Bestimmung der Fahrzeugreferenzgeschwindigkeit sowie die Einleitung von Korrekturmaßnahmen erlaubt, sobald ein Abseilen erkannt wurde, und andererseits auf gewöhnlich verbaute Komponenten und Steuer- und Regelungsroutinen zurückgreifen kann. Weiterhin soll ein zugehöriges Fahrzeugsystem angegeben werden.
In Bezug auf das Verfahren wird diese Aufgabe erfindungsgemäß durch die folgenden Schritte gelöst:
- Filterung der Radbeschleunigungen,
- Filterung der Längsbeschleunigung,
- Bildung einer korrigierten Längsbeschleunigung durch Beaufschlagung der gefilterten Längsbeschleunigung mit einem Sicherheitsoffset und mit einem Korrekturoffset,

- zeitliche Integration der Differenz zwischen der korrigierten Längsbeschleunigung und der jeweiligen Radbeschleunigung, wobei bei Überschreiten eines Schwellenwertes des Absolutwertes der Differenz während eines vorgegebenen Zeitintervalls bei einer vorgegebenen Anzahl der Räder Schritte zur Korrektur eingeleitet werden und
- der Korrekturoffset als Differenz zwischen Längsbeschleunigung und einer über die vier Räder gemittelten Radbeschleunigung berechnet wird.

Vorteilhafte Ausgestaltungen der Erfindung sind Gegenstand der Unteransprüche.
Unter der Korrektur der Fahrzeugreferenzgeschwindigkeit werden Maßnahmen verstanden, die das Ziel haben, den Schlupf der Räder zu reduzieren und das Fahrzeug fahrdynamisch zu stabilisieren, wodurch sich auch die über die Radbeschleunigungen ermittelte Fahrzeuggeschwindigkeit und die tatsächliche Fahrzeuggeschwindigkeit wieder aneinander annähern.
Die Erfindung geht von der Überlegung aus, dass zur Vermeidung zusätzlicher elektronischer Komponenten und damit entstehender zusätzlicher Kosten ein Verfahren zur Abseilerkennung der Fahrzeugreferenzgeschwindigkeit vorteilhafterweise auf die in der Bordelektronik bereits vorhandenen Komponenten bzw. Signale zurückgreifen sollte. Komponenten, die gewöhnlich in Allradfahrzeugen vorhanden sind, sind beispielsweise ein Motorsteuergerät, ein Sensor, mit dem die Längsbeschleunigung des Fahrzeuges bestimmt wird (gewöhnlich ein Beschleunigungssensor) sowie Steuerregelungs- und Auswertegeräte wie beispielsweise elektronische ESP- oder ASR-Komponenten. In einem solchen System können mit Hilfe von Raddrehzahlsensoren die Radbeschleunigungen bestimmt werden. Wie nunmehr erkannt wurde, kann eine Abseilung der Fahrzeugreferenzgeschwindigkeit zuverlässig unter Rückgriff auf von diesen Komponenten gelieferte Daten bestimmt werden, indem die Differenz zwischen der Längsbeschleunigung und der jeweiligen Radbeschleunigung über einen gewissen Zeitraum integriert wird, wobei dann bei Überschreiten dieser zeitlich integrierten Beschleunigung eines vorgegebenen Grenzwertes bzw. Schwellenwertes Maßnahmen zur Stabilisierung des Fahrzeuges bzw. zur Korrektur der Fahrzeuggeschwindigkeit eingeleitet werden können.

Die Erfindung beruht weiterhin auf der Überlegung, dass für die Zuverlässigkeit eines solchen Verfahrens die Radbeschleunigungen sowie die Längsbeschleunigungen vorverarbeitet werden sollten. Um zu zuverlässigen Aussagen zu kommen, und nicht etwa auf Grund von spuriosen Signalschwankungen bzw. Signalsprüngen, die durch das Rauschen oder die begrenzte Auflösung der entsprechenden Signale zu Stande kommen, falsche Schlüsse zu ziehen, sollten diese Signale vor der genannten Integration in einer geeigneten Weise geglättet bzw. gefiltert werden. Zusätzlich dazu sollte berücksichtigt werden, dass die von dem Längsbeschleunigungssensor gemessene Beschleunigung sowohl statische Längsbeschleunigungssensorfehler als auch Beimischungen von Komponenten des Erdgravitationsfeldes enthalten kann, insbesondere an starken Steigungen. Derartige Effekte sollten bei dem Erkennungsalgorithmus berücksichtigt werden.

Eine derartige Vorverarbeitung der Längsbeschleunigung kann, wie nunmehr erkannt wurde, durch Beaufschlagung der gefilterten Längsbeschleunigung mit einem Sicherheitsoffset, der statische Fehler bzw. die Auflösungsgrenze des Sensors berücksichtigt, sowie einem Korrekturoffset, der eine dynamische Korrektur umfasst, berücksichtigt werden.

Je nach fahrdynamischer Situation ändern sich nämlich Größe und Art der Fehler, mit der das Signal des Längsbeschleunigungssensors behaftet ist. Beispielsweise hängt die Beimischung des Erdgravitationsfeldes, also die Komponente der Erdbeschleunigung g in Richtung der Bewegungsrichtung des Fahrzeuges, von der momentanen Steigung der Fahrbahn ab.

Um diesen sich zeitlich verändernden notwendigen Signalkorrekturen Rechnung zu tragen, wird der Korrekturoffset während des Fahrzeugbetriebes vorzugsweise im Wesentlichen kontinuierlich berechnet. Der Korrekturoffset wird also dynamisch jeweils an die momentane Fahrzeugsituation angepasst. Auf diese Weise kann verhindert werden, das irrtümliche Abweichen der gemessenen Längsbeschleunigung von den Radbeschleunigungen jeweils als Abseilung der Fahrzeugreferenzgeschwindigkeit beurteilt wird, während diese Differenz in Wirklichkeit auf ein korrekturbedürftiges Signal des Längsbeschleunigungssensors zurückzuführen ist.

Der Korrekturoffset wird bevorzugt berechnet als Differenz zwischen der bevorzugt zweifach gefilterten Längsbeschleunigung und einer bevorzugt zweifach gefilterten und über die vier Räder gemittelten Radbeschleunigung. In einer alternativen Ausführungsform des Verfahrens wird dazu nur die geringste der vier Radbeschleunigungen verwendet. In weiterer alternativer Ausgestaltung können nur zwei oder drei Radbeschleunigungen gemittelt werden.

Nicht jede fahrdynamische Situation, in der sich das Fahrzeug befindet, eignet sich gleichermaßen zur Berechnung bzw. Bestimmung des Korrekturoffsets. Während gewisser fahrdynamischer Zustände des Fahrzeuges sollte deshalb vorteilhafterweise die Berechnung des Korrekturoffsets aus den vorhandenen Signalen bzw. das Erlernen des Korrekturoffsets ausgesetzt werden.

Die Berechnung des Korrekturoffsets wird vorteilhafterweise dann ausgesetzt, wenn das Gesamtschleppmoment auf Radebene betragsweise einen vorgegebenen Schwellenwert überschreitet. Das heißt, das Gesamtradschleppmoment ist kleiner als ein vorgegebener negativer Wert, beispielsweise -300 Nm. In diesem Fall ist die Wahrscheinlichkeit, dass die Räder auf entsprechend niedrigem bzw. fahrbarem Reibwert starken Schlupf aufweisen, sehr hoch. Das Gesamtradmoment wird bevorzugt bestimmt, indem das aus dem Motorsteuergerät übermittelte Schleppmoment in der ASR mit Hilfe der Gangstufe in Radmoment umgerechnet wird.

Zum Lernen des Korrekturoffsets sollte weiterhin das Fahrzeug in Bewegung sein und sich vorteilhafterweise wenigstens mit Schrittgeschwindigkeit fortbewegen. Die Berechnung des Korrekturoffsets wird vorteilhafterweise dann ausgesetzt, wenn die aktuell bestimmte Fahrzeugreferenzgeschwindigkeit einen vorgegebenen Schwellenwert unterschreitet. Ein geeigneter Schwellenwert dafür liegt beispielsweise bei 5 km/h.

Für das Lernen des Korrekturoffsets ist ein stabiler fahrdynamischer Zustand des Fahrzeuges mit möglichst gleichbleibender Geschwindigkeit vorteilhaft, da beim Lernen des Offsets die Artefakte, die durch statische Längsbeschleunigungssensorfehler und die Steigung verursacht werden, identifiziert werden sollen. Vorzugsweise wird daher die Berechnung des Korrekturoffsets ausgesetzt, wenn sich während einer vorgegebenen Zeitspanne die Differenz zwischen maximaler und minimaler Radbeschleunigung für wenigstens ein Rad um mehr als einen vorgegebenen Schwellenwert ändert. Vorteilhafterweise werden dazu alle jedoch vier Räder berücksichtigt, wobei die Differenz zwischen der maximalen Radbeschleunigung eines der Räder und der minimalen Radbeschleunigung eines der Räder bestimmt wird. Die Zeitspanne während der die Differenz einen vorgegebenen Schwellenwert, beispielsweise 0,012 g, nicht überschreiten darf, beträgt vorteilhafterweise 70 ms (was im Wesentlichen 7 Loops bei einer Taktzeit von 10 ms von typischen Steuereinheiten entspricht).

Die Bestimmung bzw. Berechnung bzw. das Lernen des Korrekturoffsets wird vorteilhafterweise auch dann ausgesetzt, wenn der Radlenkwinkel betragsweise größer als ein vorgegebener Wert ist. Dieser Wert beträgt vorteilhafterweise 2,5°. Damit wird sichergestellt, dass das Fahrzeug im Wesentlichen geradeaus fährt, so dass in die Bestimmung des Korrekturoffsets keine unerwünschten Artefakte durch die Kurvenfahrt eingehen (Geometrieschlupf).

Die Berechnung des Korrekturoffsets wird vorteilhafterweise weiterhin dann ausgesetzt, wenn während einer vorgegebenen Zeitspanne ein Lastwechsel- und/oder Runterschaltvorgang vorgenommen wurde. Anders herum formuliert sollte die Bestimmung des Korrekturoffsets erst dann erfolgen, wenn seit einer vorgegebenen Zeitspanne kein Runterschaltvorgang oder Lastwechsel erfolgt ist. Ein derartiges Zeitintervall beträgt vorteilhafterweise 1 s.

Da sich die fahrdynamische Situation des Fahrzeuges kontinuierlich ändert - dies kann insbesondere Steigungen oder auch die Beschaffenheit der Fahrbahn betreffen - wird der Korrekturoffset vorteilhafterweise als ungültig gekennzeichnet,
wenn die letzte Anpassung des Korrekturoffsets älter ist als ein vorgegebenes Zeitintervall, beispielsweise 10 s. Damit kann verhindert werden, dass durch die Verwendung eines veralteten Korrekturoffsets Schlüsse bzgl. der Fahrzeugreferenzgeschwindigkeit gezogen werden, die nicht den tatsächlichen Verhältnissen der aktuellen Fahrsituation entsprechen. Dadurch können auch entsprechende, auf irrtümlichen Annahmen beruhende Korrekturmaßnahmen verhindert werden. Bei ungültig gekennzeichnetem Korrekturoffset wird also die Abseilungserkennung nicht weiter durchgeführt.

Für die Durchführung des Verfahrens ist es vorteilhaft, wenn die Signale der Radbeschleunigungen und der Längsbeschleunigung von Rauschanteilen und Artefakten, die von der begrenzten Signalauflösung herrühren, weitestgehend befreit sind. Deshalb kann es vorteilhaft sein, wenn die Längsbeschleunigung vor der Bildung der korrigierten Längsbeschleunigung einer zweiten Filterung unterzogen wird. Gleichermaßen kann es vorteilhaft sein, wenn die Radbeschleunigungen nach einer ersten Filterung einer zweiten Filterung unterzogen werden. Vorteilhafterweise werden die Radbeschleunigungen und die Längsbeschleunigungen in der zweiten Filterung tiefpassgefiltert und so aneinander angepasst, dass die gefilterten Signale im stabilen Fahrzeugzustand keinen Phasenverzug aufweisen. Je nach verwendetem Filter bzw. Filteralgorithmus kann dies durch eine Anpassung der jeweiligen Filterkonstanten geschehen. In alternativen Ausführungsformen kann statt der Tiefpassfilterung auch ein anderer auf einem IIR oder FIR Filter basierende Filteralgorithmus verwendet werden, der zu einer geeigneten Signalglättung führt.

Die zeitliche Integration der Differenz zwischen der korrigierten Längsbeschleunigung und der jeweiligen Radbeschleunigung wird vorteilhafterweise gestartet, wenn bei dem vorhandenen Rekuperations- oder Schleppmoment ein Abseilen der Räder auf Grund kleinster Reibwerte technisch möglich ist. Dies kann vorteilhafterweise dann geschehen, wenn das Rekuperations- oder Schleppmoment einen vorgegebenen Schwellenwert unterschreitet. Ein geeigneter Schwellenwert für das Starten der Integration liegt beispielsweise bei -400 Nm.

Die Integration wird vorteilhafterweise jeweils nach Ablauf einer vorgegebenen maximalen Integrationszeit, vorteilhafterweise 15 s, beendet. Nach Ablauf dieser Zeitspanne wird sie vorzugsweise neu gestartet, wenn die oben beschriebenen Bedingungen erfüllt sind und wenn ein gültiger Korrekturoffset vorliegt.

Bei dem Erkennen eines Abseilens der Fahrzeugreferenzgeschwindigkeit sind bei dem erfindungsgemäßen Verfahren Schritte zu deren Korrektur bzw. zur Stabilisierung des Fahrzeuges vorgesehen. Zur Einleitung dieser Schritte ist eine Auslöseschwelle vorgesehen. Diese Auslöseschwelle ist dann erreicht, wenn das oben dargelegte Integral, vorteilhafterweise bei jeweils jedem Rad, einen vorgegebenen Schwellenwert überschreitet. Ein solcher Schwellenwert liegt vorteilhafterweise bei 0,5 km/h. Erreicht das Integral also - bevorzugt für alle vier Räder - diesen Wert, so gilt die Abseilung der Fahrzeugreferenzgeschwindigkeit als erkannt.

Vorteilhafterweise werden die entsprechenden Korrekturschritte aber nicht sofort eingeleitet, sondern es wird auf das Ablaufen eines Sicherheitszeitgliedes von z. B. 120 ms gewartet, bevor die Schritte zur Korrektur eingeleitet werden. Mit anderen Worten: Die Überschreitung des Schwellenwertes des Integrals für vorteilhafterweise alle vier Räder sollte im gewählten Beispiel für mindestens 120 ms vorliegen.

Zur Korrektur bzw. Fahrzeugstabilisierung sind verschiedene Maßnahmen denkbar. In einer bevorzugten Ausführungsform des Verfahrens wird zur Korrektur der Fahrzeugreferenzgeschwindigkeit ein diagonal verteilter Stützpuls (z. B. linkes Vorderrad und rechtes Hinterrad) an den Rädern des Kraftfahrzeuges ausgelöst. Ein derartiger Stützpuls, der gewöhnlich in herkömmlichen Antischlupfregelungsmodulen implementiert ist und vorzugsweise 5 bar bis 10 bar hydraulischen Druck aufweist, führt dazu, dass die Räder einer Achse eine Differenzdrehzahl erhalten. Das drucklose Rad wird dadurch zur tatsächlichen bzw. wahren Fahrzeuggeschwindigkeit zurücklaufen, und das mit Druck beaufschlagte Rad wird in tieferen Schlupf gehen bzw. vergrößerten Schlupf aufweisen, womit die Motorschleppmomentregelung (MSR) ausgelöst wird. In dem Fall, dass die Abseilung der Fahrzeugreferenzgeschwindigkeit fehlerhaft erkannt wurde hat die Auslösung des Stützpulses auf die Stabilität des Fahrzeuges keine negativen Folgen.

Alternativ oder zusätzlich zu der oben beschriebenen Maßnahme wird vorteilhafterweise eine Motorschleppmomentregulierungsanforderung an das Motorsteuergerät gesendet. Im Fall von Hybridfahrzeugen bezeichnet Motorsteuergerät das Hybridsteuergerät, welches Steuer- und Regelungsfunktionen sowohl des Verbrennungsmotors als auch des Elektromotors umfasst. Eine solche Anforderung kann beispielsweise einen vorteilhaften Wert von -40 Nm haben. Die aus dieser Anforderung resultierende Reduktion des Schleppmomentes (bei Verbrennungskraftmaschinen bzw. die Rekuperationsverminderung bei Hybridfahrzeugen) führt die Räder an die wahre Fahrzeuggeschwindigkeit zurück und stützt somit die Fahrzeugreferenzgeschwindigkeit. Bei einer Fehlerkennung der Abseilung wird durch diese Maßnahme eine leichte Unterbremsung durchgeführt.

In Bezug auf das Fahrzeugsystem wird die oben genannte Aufgabe erfindungsgemäß gelöst mit einem Motorsteuergerät, einem Sensor zur Messung der Längsbeschleunigung und einer elektronischen Steuer- und Regeleinheit, in der ein oben dargestelltes Verfahren durchgeführt wird.

Die Steuer- und Regeleinheit kann eine separate Einheit sein. Sie kann auch hardware- und/oder softwaremäßig mit einer bereits im Fahrzeug vorhandenen Einheit kombiniert bzw. in diese integriert werden.

Die Vorteile der Erfindung bestehen insbesondere darin, dass durch die Verwendung von in modernen Allradfahrzeugen bereits zur Verfügung stehenden Signalen zur Bestimmung der Fahrzeugreferenzgeschwindigkeit der hardwareseitige Bedarf für das Verfahren extrem gering gehalten werden kann. Durch die Aufintegration der Differenz zwischen der Längsbeschleunigung und der jeweiligen Radbeschleunigung kann das Auftreten von Schlupf zuverlässig detektiert werden. Dies wird insbesondere möglich durch eine dynamische bzw. kontinuierliche Berechnung eines Korrekturoffsets, wobei durch die Beaufschlagung des Wertes der Längsbeschleunigung mit einem Sicherheitsoffset und mit einem Korrekturoffset ein verlässlicher Wert der Längsbeschleunigung des Fahrzeuges erzielt wird. Durch die Kopplung der Bestimmung des Korrekturoffsets an bestimmte fahrdynamische Bedingungen wird erreicht, dass der Korrekturoffset bestmöglichst Artefakte wie Einflüsse der Steigung sowie statische Sensorfehler wiederspiegelt.

Ein Ausführungsbeispiel der Erfindung wird anhand einer Zeichnung näher erläutert. Darin zeigen in stark schematisierter Darstellung:
- FIG. 1: ein Blockdiagramm eines Verfahrens zur Erkennung und Korrektur der Fahrzeugreferenzgeschwindigkeit in einer bevorzugten Ausführungsform für ein Allradfahrzeug, und
- FIG. 2: ein Kraftfahrzeug mit einem Fahrzeugsystem mit einem Motor und einem Motorsteuergerät, einem Sensor zur Messung der Längsbeschleunigung und einer elektronischen Steuer- und Regeleinheit zur Durchführung des Verfahrens gemäß FIG. 1.

Gleiche Teile sind in beiden Figuren mit denselben Bezugszeichen versehen.

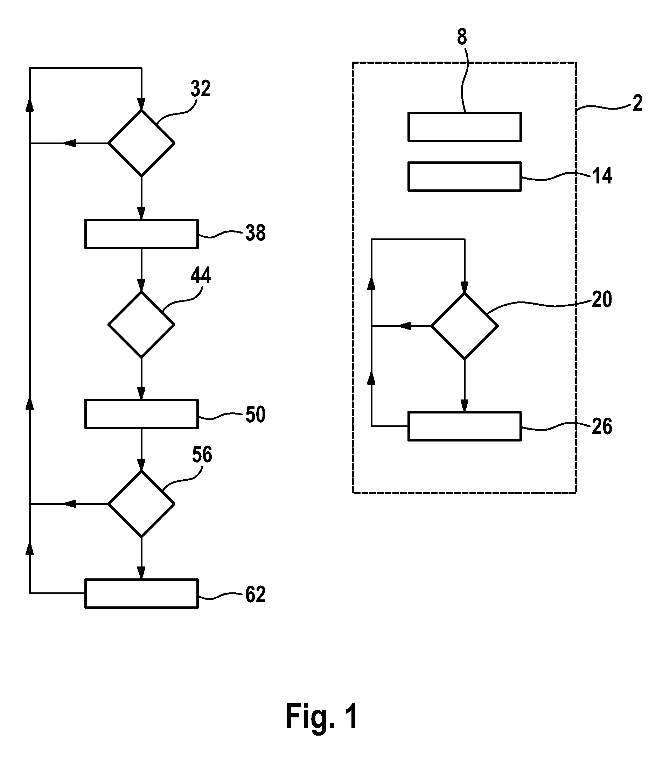

Das in FIG. 1 dargestellte Verfahren zur Erkennung und Korrektur der Fahrzeugreferenzgeschwindigkeit nutzt Signale, die von verschiedenen elektronischen Komponenten eines Allradfahrzeuges gewöhnlich zur Verfügung gestellt werden können. Dabei handelt es sich um die Längsbeschleunigung des Fahrzeuges, also die Beschleunigung in Fahrtrichtung bei einer Geradeausfahrt des Fahrzeuges, und die einzelnen Radbeschleunigungen. Letztere werden mit Hilfe von den einzelnen Rädern zugeordneten Raddrehzahlsensoren bestimmt.

Zur Bestimmung eines möglichen Abseilens der Fahrzeugreferenzgeschwindigkeit werden diese Signale noch zwischenverarbeitet. In dem Verfahren laufen dazu verschiedene Verfahrensschritte - bedarfsweise auch parallel - ab.

Die in dem gestrichelten Kasten 2 durch die Blöcke 8, 14, 26 und die Entscheidung 20 dargestellten Verfahrensschritte werden bevorzugt im Wesentlichen kontinuierlich ausgeführt. In Block 8 werden die Radbeschleunigungen tiefpassgefiltert. In Block 14 wird die von dem Längsbeschleunigungssensor gemessene Längsbeschleunigung tiefpassgefiltert. Die Filterkonstanten der jeweiligen Tiefpassfilter für die Radbeschleunigungen und die Längsbeschleunigung werden dabei so aneinander angepasst, dass die gefilterten Signale im stabilen Fahrzeugzustand keinen Phasenverzug aufweisen. Dadurch können auch gleichzeitig auftretende, geringe Abweichungen zwischen Längsbeschleunigung und Radbeschleunigungen erkannt werden.

In alternativer Ausgestaltung des Verfahrens erfolgen die Schritte in den Blöcken 8 und 14 - also die Filterungen - bedarfsweise, wenn das Verfahren eine zeitliche Integration der Differenz zwischen jeweiliger Radbeschleunigung und der Längsbeschleunigung durchführt. Für die zeitliche Aufintegration dieser Differenz wird aber nicht die gefilterte Längsbeschleunigung an sich verwendet. Diese wird vorher noch mit zwei Korrekturen versehen: einem Sicherheitsoffset sowie einem Korrekturoffset.

Der Sicherheitsoffset ist ein konstanter Wert, im vorliegenden Ausführungsbeispiel beträgt er 0,02 g, der zur gefilterten Längsbeschleunigung addiert wird und das Verfahren robust gegenüber Unschärfen wie Rauschen, Auflösung der Signale usw. macht.

Der Korrekturoffset wird dynamisch an die momentane Fahrsituation des Fahrzeuges angepasst und kompensiert im Wesentlichen die Steigung der Fahrbahn und statische Längsbeschleunigungsfehler. Der Korrekturoffset wird möglichst kontinuierlich neu berechnet bzw. neu erlernt. Er wird gebildet aus dem Delta bzw. der Differenz zwischen der gefilterten Längsbeschleunigung und der über die vier Räder gemittelten Radbeschleunigung.

In der Entscheidung 20 wird überprüft, ob geeignete Bedingungen zum Lernen eines Korrekturoffsets, der auf die gefilterte Längsbeschleunigung beaufschlagt wird, vorliegen. Liegen diese Bedingungen vor, wird in Block 26 der Korrekturoffset neu berechnet. Liegt die Bedingung nicht vor, wird wieder die Entscheidung 20 aufgerufen, bei der erneut überprüft wird, ob der Korrekturoffset bestimmt werden kann. Es handelt sich bei den Verfahrensschritten Entscheidung 20 und Block 26 gewissermaßen um Anweisungen, die schleifenförmig ausgeführt werden. In einer alternativen, seriell ausgelegten Ausgestaltung des Verfahrens, die sich besonders gut für die Implementation in Steuergeräten eignet, werden die Verfahrensschritte in den Blöcken oder Entscheidungen 8, 14, 20, 26 sowie - bedarfsweise - die noch zu besprechenden Schritten in den Blöcken oder Entscheidungen 32, 38, 44, 50, 56, 62 während einer Loop der Steuereinheit im Wesentlichen sequentiell bzw. hintereinander ausgeführt.

Das Verfahren verzweigt aus der Entscheidung 20 zu Block 26, in der der Korrekturoffset bestimmt wird, nur unter bestimmten, vorgegebenen Bedingungen. Im vorliegenden Ausführungsbeispiels erfolgt die Neuberechnung nur, wenn der Wert der Längsbeschleunigung gültig ist, d. h., dass der Längsbeschleunigungssensor keinen internen, funktionellen Fehler anzeigt. Weiterhin wird der Korrekturoffset nur berechnet, wenn die momentan ermittelte Fahrzeugreferenzgeschwindigkeit größer als 5 km/h ist, das Fahrzeug sich also wenigstens mit Schrittgeschwindigkeit fortbewegt. Zudem darf der Radlenkwinkel betragsweise einen Wert von 2,5° nicht überschreiten, d. h., das Fahrzeug soll im Wesentlichen geradeaus fahren. Weiterhin dürfen die Räder seit 2 s nicht überdreht haben. Diese Bedingung kann quantifiziert werden über den Summenschlupf aller Räder, also die Summe der jeweiligen Radschlupfe, die kleiner sein soll als 2,25 plus ein Fünfzigstel mal der Fahrzeugreferenzgeschwindigkeit, die vorzugsweise über ein im Fahrzeug integriertes Traction-Control-System (TCS) ermittelt wird.

Zudem sollten während eines vorgegebenen Zeitintervalls von einer vorgegebenen Zeit, beispielsweise von 7 Loops, wobei ein Loop einer Taktzeit von 10ms entspricht, die Räder stabil und gleichmäßig gelaufen sein. Das heißt, die bei den Rädern gemessene und gefilterte maximale Beschleunigung minus die minimale Beschleunigung sollte kleiner sein als 0,012 g. Der Korrekturoffset wird weiterhin nur dann berechnet, wenn während der letzten 2 s kein ESP-, ABS- oder EDS-Eingriff geschehen ist. Weiterhin sollte seit wenigstens 1 s kein Runterschaltvorgang oder Lastwechsel geschehen sein. Zusätzlich dazu sollte das Schleppmoment im vorliegenden Ausführungsbeispiel größer als -300 Nm sein, d. h. betragsmäßig klein genug, um sichergehen zu können, dass die Räder nicht in Schlupf gehen.

Parallel zu den im gestrichelten Kasten 2 dargestellten Verfahrensschritten 20 und 26 laufen die Verfahrensschritte ab, die im Folgenden besprochen werden. Alternativ dazu können diese Verfahrensschritte nach den im Kasten 2 dargestellten Schritten ablaufen, so dass in jedem Loop des Steuergerätes alle Schritte hintereinander ablaufen. Dabei können auch - abhängig von dem Ausgang der entsprechenden Entscheidungen 20, 32, 44, 56 - gewisse Schritte ausgelassen werden.

In der Entscheidung 32 wird überprüft, ob der Korrekturoffset, der momentan bzw. aktuell vorliegt, gültig ist. Beispielsweise wird der Korrekturoffset, wenn seine Berechnung länger als 10 s zurückliegt, als ungültig gekennzeichnet. Damit wird verhindert, dass eine Fehlerkennung stattfindet, welche dadurch verursacht wird, dass sich die fahrdynamischen Bedingungen geändert haben, und der Korrekturoffset keine geeignete Korrektur zum vom Längsbeschleunigungssensor gemessenen Wert der Längsbeschleunigung mehr darstellt. In dem Falle, dass der Korrekturoffset gültig ist, wird in Block 38 eine korrigierte Längsbeschleunigung berechnet. Dazu wird die gefilterte Längsbeschleunigung mit einem Sicherheitsoffset von 0,02 g (je nach Fahrzeug und Anwendungsfall können hier auch andere Werte gewählt werden) beaufschlagt sowie mit dem Korrekturoffset beaufschlagt. Falls der Korrekturoffset nicht gültig ist, verzweigt das Verfahren wieder zurück zur Entscheidung 32. Wie oben erwähnt, soll eine Abseilerkennung nur durchgeführt werden, wenn der Korrekturoffset einen verlässlichen Wert hat.

In der Entscheidung 44 wird nun überprüft, ob Bedingungen vorliegen, auf Grund derer die Abseilerkennung gestartet werden soll. Die Abfolge der Entscheidungen 32 und 44 kann auch in umgekehrter Reihenfolge erfolgen, oder die Anweisungen der beiden Entscheidungen 32, 44 können im Wesentlichen zeitgleich durchgeführt werden.

Die Abseilerkennung in Block 50, die durch eine zeitliche Integration der Differenz zwischen der korrigierten Längsbeschleunigung und der jeweiligen Radbeschleunigung durchgeführt wird, wird im vorliegenden Ausführungsbeispiel gestartet, wenn das Schleppmoment kleiner als -400 Nm ist. Eine solche Situation tritt z. B. auf, wenn der Fahrer plötzlich vom Gas geht oder einen niedrigeren Gang einlegt. Bei Schleppmomenten in dieser Größenordnung ist ein Abseilen der Räder auf Grund kleinster Reibwerte technisch möglich.
Als Beispiel sei hier ein SUV nach heutigem Stand der Technik mit der heute üblichen Rekuperationsleistung angeführt. Bei der Version mit Verbrennungskraftmotor schränkt sich der relevante Bereich, in dem die Integration gestartet wird, auf die erste bis zweite Gangstufe ein. Bei der Hybridversion mit maximal 1500 Nm Rekuperationsmoment liegt der relevante Bereich im Geschwindigkeitsbereich zwischen 20 km/h und 70 km/h.
Die Integration der Differenz zwischen korrigierter Längsbeschleunigung und Radbeschleunigung wird radweise durchgeführt. Die Integration wird jeweils abgebrochen, wenn die Integration schon 15 s dauert oder wenn das Schleppmoment wieder größer als -300 Nm ist. In diesem Fall ist nicht mehr mit einer schleichenden Schlupfvergrößerung der Räder zu rechnen. Die Integration wird weiterhin abgebrochen, wenn der von dem Längsbeschleunigungssensor im Wesentlichen kontinuierlich gemessene Wert der Längsbeschleunigung ungültig wird oder wenn ein ESP- oder ABS-Eingriff erfolgt.

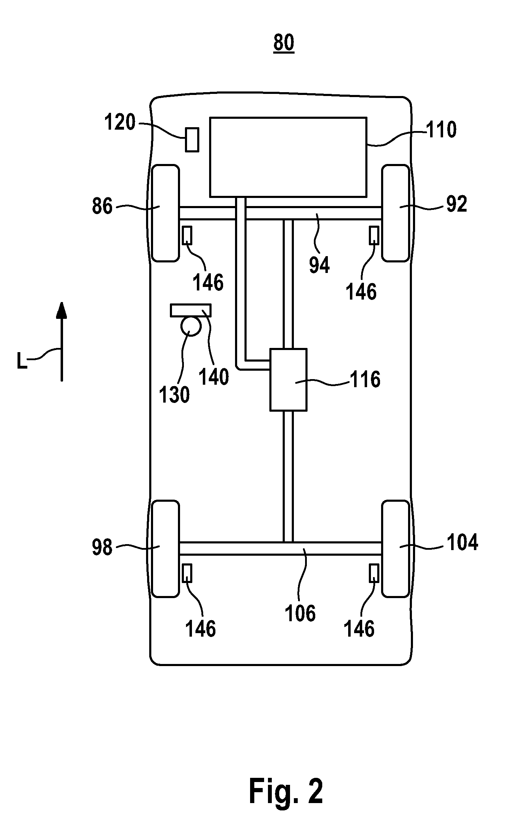

In der Entscheidung 56 wird überprüft, ob eine Auslöseschwelle für Referenz stützende Maßnahmen erreicht ist. Ein Abseilen der Fahrzeuggeschwindigkeit gilt als erkannt, wenn bei allen vier Rädern das durchgeführte Integral den Schwellenwert von 0,5 km/h erreicht oder überschreitet. Ist dies der Fall, werden in Block 62 Maßnahmen zur Stützung der Fahrzeuggeschwindigkeit bzw. zur Stabilisierung des Fahrzeuges eingeleitet. Dies geschieht aber erst nach Durchlaufen eines Sicherheitszeitintervalles von beispielsweise 120 ms, während dessen die Auslöseschwelle bzw. Auslösebedingung (Schwellenwert von 0,5 km/h ist erreicht) immer noch vorliegen muss. Im vorliegenden Ausführungsbeispiel bestehen die Maßnahmen in einem (bezüglich der räumlichen Anordnung der Räder) diagonalen Stützpuls und/oder in einer MSR-Anforderung an das Motor- bzw. Hybridsteuergerät. Nach Durchführung der Referenz-stützenden Maßnahmen verzweigt das Verfahren wieder zur Entscheidung 32.
Das in FIG. 2 dargestellte Kraftfahrzeug 80, welches als Allradfahrzeug ausgestaltet ist, weist zwei Vorderräder 86, 92, die mit einer Vorderachse 94 verbunden sind, sowie zwei Hinterräder 98, 104, die mit einer Hinterachse 106 verbunden sind, auf. Das Kraftfahrzeug 80 wird von einem Motor 110 angetrieben, der über ein Zentraldifferential 116 beide Achsen 94, 106 antreibt.
Das Kraftfahrzeug 80 umfasst ein Fahrzeugsystem, das die Erkennung eines Abseilens der Fahrzeugreferenzgeschwindigkeit erlaubt. Dazu ist dem Motor 110 ein Motorsteuergerät 120 zugeordnet. Die Längsbeschleunigung des Fahrzeuges, also seine Beschleunigung in Längsrichtung L, wird durch einen Längsbeschleunigungssensor 130 gemessen. Die Radbeschleunigungen der Räder 86, 92, 98, 104 werden jeweils mit Hilfe von den Rädern zugeordneten Raddrehzahlsensoren 146 gemessen.
Es ist weiterhin eine elektronische Steuer- und Regeleinheit 140 vorgesehen, in der das im Zusammenhang mit FIG. 1 dargestellte Verfahren durchgeführt wird. Der Längsbeschleunigungssensor 130 ist bevorzugt in die Steuer- und Regeleinheit 140 integriert.

### Bezugszeichenliste

- 2: gestrichelter Kasten
- 8: Block
- 14: Block
- 20: Entscheidung
- 26: Block
- 32: Entscheidung
- 38: Block
- 44: Entscheidung
- 50: Block
- 56: Entscheidung
- 62: Block
- 80: Kraftfahrzeug
- 86: Vorderrad
- 92: Vorderrad
- 94: Vorderachse
- 98: Hinterrad
- 104: Hinterrad
- 106: Hinterachse
- 110: Motor
- 116: Zentraldifferential
- 120: Motorsteuergerät
- 130: Längsbeschleunigungssensor
- 140: elektronische Steuer- und Regeleinheit
- 146: Raddrehzahlsensor

- L: Längsrichtung

## Patentansprüche

1. Verfahren zur Erkennung und Korrektur der Fahrzeugreferenzgeschwindigkeit, insbesondere bei deren Abseilung durch Schlepp- und/oder Rekuperationsmoment, eines Kraftfahrzeuges, insbesondere eines Allradfahrzeuges, mit einem Motor (110) und einem Motorsteuergerät (120), wobei mit Hilfe eines Sensors die Längsbeschleunigung des Kraftfahrzeuges gemessen wird und mit Hilfe von Raddrehzahlsensoren (146) die Radbeschleunigungen bestimmt werden, mit den Schritten
- Filterung der Radbeschleunigungen,
- Filterung der Längsbeschleunigung und
- Bildung einer korrigierten Längsbeschleunigung durch Beaufschlagung der gefilterten Längsbeschleunigung mit einem Offset,
- zeitliche Integration der Differenz zwischen der korrigierten Längsbeschleunigung und der jeweiligen Radbeschleunigung,
**dadurch gekennzeichnet, dass**
- der Offset ein Sicherheitsoffset und ein Korrekturoffset ist,
- bei Überschreiten eines Schwellenwertes des Absolutwertes der Differenz während eines vorgegebenen Zeitintervalls bei einer vorgegebenen Anzahl der Räder Schritte zur Korrektur eingeleitet werden und
- der Korrekturoffset als Differenz zwischen Längsbeschleunigung und einer über die vier Räder gemittelten Radbeschleunigung berechnet wird.

2. Verfahren nach Anspruch 1, wobei der Korrekturoffset während des Fahrzeugbetriebes im Wesentlichen kontinuierlich berechnet wird.

3. Verfahren nach Anspruch 1 oder 2, wobei die Berechnung des Korrekturoffsets ausgesetzt wird, wenn das Gesamtradschleppmoment betragsweise einen vorgegebenen Schwellenwert überschreitet.

4. Verfahren nach einem der Ansprüche 1 bis 3, wobei die Berechnung des Korrekturoffsets ausgesetzt wird, wenn die aktuell bestimmte Fahrzeugreferenzgeschwindigkeit einen vorgegebenen Schwellenwert unterschreitet.

5. Verfahren nach einem der Ansprüche 1 bis 4, wobei die Berechnung des Korrekturoffsets ausgesetzt wird, wenn sich während einer vorgegebenen Zeitspanne die Differenz zwischen maximaler und minimaler Radbeschleunigung für wenigstens ein Rad um mehr als einen vorgegebenen Schwellenwert ändert.

6. Verfahren nach einem der Ansprüche 1 bis 5, wobei die Berechnung des Korrekturoffsets ausgesetzt wird, wenn während einer vorgegebenen Zeitspanne ein Lastwechsel und/oder Runterschaltvorgang vorgenommen wurde.

7. Verfahren einem der Ansprüche 1 bis 6, wobei der Korrekturoffset als ungültig gekennzeichnet wird, wenn die letzte Anpassung des Korrekturoffsets älter ist als ein vorgegebenes Zeitintervall.

8. Verfahren nach einem der Ansprüche 1 bis 7, wobei vor der Bildung der korrigierten Längsbeschleunigung die Längsbeschleunigung einer zweiten Filterung unterzogen wird.

9. Verfahren nach einem der Ansprüche 1 bis 8, wobei die Radbeschleunigungen nach einer ersten Filterung einer zweiten Filterung unterzogen werden.

10. Verfahren nach einem der Ansprüche 1 bis 9, wobei die zweite Filterung der Längsbeschleunigung und die Filterungen der Radbeschleunigungen Tiefpassfilterungen sind und so aneinander angepasst werden, dass die gefilterten Signale im stabilen Fahrzeugzustand keinen Phasenverzug aufweisen.

11. Verfahren nach einem der Ansprüche 1 bis 10, wobei die Integration gestartet wird, wenn bei dem vorhandenen Rekuperations- oder Schleppmoment ein Abseilen der Räder aufgrund kleinster Reibwerte technisch möglich ist.

12. Verfahren nach einem der Ansprüche 1 bis 11, wobei die Integration gestartet wird, wenn das Rekuperations- oder Schleppmoment einen vorgegebenen Schwellenwert unterschreitet.

13. Verfahren nach einem der Ansprüche 1 bis 12, wobei die Integration nach Ablauf einer vorgegebenen maximalen Integrationszeit beendet wird.

14. Verfahren nach einem der Ansprüche 1 bis 13, wobei zur Korrektur der Fahrzeugreferenzgeschwindigkeit ein diagonal verteilter Stützpuls an den Rädern des Kraftfahrzeuges ausgelöst wird.

15. Verfahren nach Anspruch 14, wobei der Stützpuls einen hydraulischen Druck zwischen 5 und 10 bar aufweist.

16. Verfahren nach einem der Ansprüche 1 bis 15, wobei zur Korrektur der Fahrzeugreferenzgeschwindigkeit eine Anforderung zur Motor-Schleppmoment-Regelung an das Motorsteuergerät (120) gesendet wird.

17. Verfahren nach einem der Ansprüche 1 bis 16, wobei die Längsbeschleunigung und die Radbeschleunigung jeweils zweifach gefiltert wird.

18. Fahrzeugsystem mit einem Motorsteuergerät (120), einem Sensor zur Messung der Längsbeschleunigung und einer elektronischen Steuer- und Regeleinheit, in der ein Verfahren nach einem der Ansprüche 1 bis 17 durchgeführt wird.

## Claims

1. Method for the detection and correction of the vehicle reference speed, in particular in the event of its decrease by drag torque and/or regeneration torque, of a motor vehicle, in particular of an all-wheel drive vehicle, with an engine (110) and an engine controller (120), the longitudinal acceleration of the motor vehicle being measured with the aid of a sensor and the wheel accelerations being determined with the aid of wheel speed sensors (146), having the steps:
- filtering of the wheel accelerations,
- filtering of the longitudinal acceleration and
- forming a corrected longitudinal acceleration by applying an offset to the filtered longitudinal acceleration,
- integration against time of the difference between the corrected longitudinal acceleration and the respective wheel acceleration,
**characterized in that**
- the offset is a safety offset and a correction offset,
- steps for correction are initiated in the event of exceeding a threshold value of the absolute value of the difference during a predetermined time interval for a predetermined number of wheels and
- the correction offset is calculated as the difference between the longitudinal acceleration and a wheel acceleration that is averaged across the four wheels.

2. Method according to Claim 1, wherein the correction offset is essentially continuously calculated during the operation of the vehicle.

3. Method according to Claim 1 or 2, wherein the calculation of the correction offset is omitted if the magnitude of the total drag torque exceeds a predetermined threshold value.

4. Method according to any one of the Claims 1 through 3, wherein the calculation of the correction offset is omitted if the actually determined vehicle reference speed is below a predetermined threshold value.

5. Method according to any one of the Claims 1 through 4, wherein the calculation of the correction offset is omitted if during a predetermined time interval the difference between the maximum and minimum wheel acceleration for at least one wheel changes by more than a predetermined threshold value.

6. Method according to any one of the Claims 1 through 5, wherein the calculation of the correction offset is omitted if during a predetermined time interval a load change and/or a downshift is carried out.

7. Method according to one of the Claims 1 through 6, wherein the correction offset is characterized as invalid if the last adaptation of the correction offset is older than a predetermined time interval.

8. Method according to any one of the Claims 1 through 7, wherein the longitudinal acceleration is subjected to a second filtering prior to the formation of the corrected longitudinal acceleration.

9. Method according to any one of the Claims 1 through 8, wherein the wheel accelerations are subjected to a second filtering following a first filtering.

10. Method according to any one of the claims 1 through 9, wherein the second filtering of the longitudinal acceleration and the filterings of the wheel accelerations are low pass filterings and are adapted to each other so that the filtered signals have no phase delay in the stable vehicle state.

11. Method according to any one of the Claims 1 through 10, wherein the integration is started when a decrease at the wheels resulting from very small coefficients of friction is technically possible for the available regeneration torque or drag torque.

12. Method according to any one of the Claims 1 through 11, wherein the integration is started when the regeneration or drag torque is below a predetermined threshold value.

13. Method according to any one of the Claims 1 through 12, wherein the integration is terminated following the expiry of a predetermined maximum integration time.

14. Method according to any one of the Claims 1 through 13, wherein a diagonally distributed supporting pulse is triggered at the wheels of the motor vehicle for correction of the vehicle reference speed.

15. Method according to Claim 14, wherein the supporting pulse has a hydraulic pressure between 5 and 10 bar.

16. Method according to any one of the Claims 1 through 15, wherein a request for engine braking control is sent to the engine controller (120) for correction of the vehicle reference speed.

17. Method according to any one of the Claims 1 through 16, wherein the longitudinal acceleration and the wheel acceleration are each twice filtered.

18. Vehicle system with an engine controller (120), a sensor for the measurement of the longitudinal acceleration and an electronic control and regulation unit, in which a method according to any one of the Claims 1 through 17 is carried out.

## Revendications

1. Procédé pour détecter et corriger la vitesse de référence de véhicule, en particulier lors de sa descente par le couple de ralentissement et/ou de récupération, d'un véhicule automobile, en particulier d'un véhicule à quatre roues motrices, équipé d'un moteur (110) et d'un appareil de commande de moteur (120), dans lequel l'accélération longitudinale du véhicule automobile est mesurée à l'aide d'un capteur et les accélérations des roues sont déterminées à l'aide de capteurs de vitesse de rotation des roues (146), comportant les étapes suivantes
- le filtrage des accélérations des roues,
- le filtrage de l'accélération longitudinale et
- l'établissement d'une accélération longitudinale corrigée par application d'un décalage à l'accélération longitudinale filtrée,
- l'intégration temporelle de la différence entre l'accélération longitudinale corrigée et l'accélération respective des roues,
**caractérisé en ce que**
- le décalage est un décalage de sécurité et un décalage de correction,
- lors du dépassement d'une valeur de seuil de la valeur absolue de la différence pendant un intervalle de temps prédéfini pour une partie prédéfinie des roues des étapes de correction sont mises en oeuvre et
- le décalage de correction est calculé sous la forme d'une différence entre l'accélération longitudinale et une accélération des roues moyennée sur les quatre roues.

2. Procédé selon la revendication 1, dans lequel le décalage de correction est calculé sensiblement en continu pendant le fonctionnement du véhicule.

3. Procédé selon la revendication 1 ou 2, dans lequel le calcul du décalage de correction est suspendu lorsque la valeur du couple de ralentissement total des roues dépasse une valeur de seuil prédéfinie.

4. Procédé selon l'une quelconque des revendications 1 à 3, dans lequel le calcul du décalage de correction est suspendu lorsque la vitesse de référence actuelle déterminée d'un véhicule s'abaisse en-dessous d'une valeur de seuil prédéfinie.

5. Procédé selon l'une quelconque des revendications 1 à 4, dans lequel le calcul du décalage de correction est suspendu lorsque la différence entre les accélérations de roue maximale et minimale pour au moins une roue se modifie de plus d'une valeur de seuil prédéfinie pendant une période de temps prédéfinie.

6. Procédé selon l'une quelconque des revendications 1 à 5, dans lequel le calcul du décalage de correction est suspendu lorsqu'un changement de charge et/ou un processus de rétrogradage a été effectué pendant une période de temps prédéfinie.

7. Procédé selon l'une quelconque des revendications 1 à 6, dans lequel le décalage de correction est caractérisé comme étant invalide lorsque la dernière adaptation du décalage de correction est plus ancienne qu'un intervalle de temps prédéfini.

8. Procédé selon l'une quelconque des revendications 1 à 7, dans lequel l'accélération longitudinale est soumise à un deuxième filtrage avant l'établissement de l'accélération longitudinale corrigée.

9. Procédé selon l'une quelconque des revendications 1 à 8, dans lequel les accélérations des roues sont soumises à un deuxième filtrage après un premier filtrage.

10. Procédé selon l'une quelconque des revendications 1 à 9, dans lequel le deuxième filtrage de l'accélération longitudinale et les filtrages des accélérations des roues sont des filtrages passe-bas et sont adaptés les uns aux autres de telle manière que les signaux filtrés, dans un état stable du véhicule, ne présentent aucun retard de phase.

11. Procédé selon l'une quelconque des revendications 1 à 10, dans lequel l'intégration est commencée lorsque, lors de la présence d'un couple de récupération ou de ralentissement, une descente des roues est techniquement possible sur la base du coefficient de frottement le plus faible.

12. Procédé selon l'une quelconque des revendications 1 à 11, dans lequel l'intégration est commencée lorsque le couple de récupération ou de ralentissement s'abaisse en-dessous d'une valeur de seuil prédéfinie.

13. Procédé selon l'une quelconque des revendications 1 à 12, dans lequel l'intégration est interrompue après écoulement d'un temps d'intégration maximum prédéfini.

14. Procédé selon l'une quelconque des revendications 1 à 13, dans lequel une impulsion de soutien répartie en diagonale est déclenchée sur les roues du véhicule automobile pour corriger la vitesse de référence du véhicule.

15. Procédé selon la revendication 14, dans lequel l'impulsion de soutien présente une pression hydraulique comprise entre 5 et 10 bar.

16. Procédé selon l'une quelconque des revendications 1 à 15, dans lequel une demande de régulation du couple moteur-ralentissement est envoyée à l'appareil de commande de moteur (120) pour corriger la vitesse de référence du véhicule.

17. Procédé selon l'une quelconque des revendications 1 à 16, dans lequel l'accélération longitudinale et l'accélération des roues sont respectivement doublement filtrées.

18. Système de véhicule équipé d'un appareil de commande de moteur (120), d'un capteur pour la mesure de l'accélération longitudinale et d'une unité de commande et de régulation, dans lequel un procédé selon l'une quelconque des revendications 1 à 17 est mis en oeuvre.
